# EUROPEAN PATENT SPECIFICATION

(11) **EP 3 834 593 B1**
(45) Date of publication and mention of the grant of the patent: **07.06.2023**
(21) Application number: 20212329.5
(22) Date of filing: 07.12.2020
(51) Int. Cl.: A01C 3/00, C02F 9/00, C05F 3/00, C05F 3/06, C02F 1/00, C02F 1/28, C02F 1/44, C02F 11/06, C02F 11/10, C02F 11/121, C02F 11/13, C02F 11/143, C02F 11/145, C02F 103/20

(54) **METHOD OF ANIMAL LIQUID MANURE PROCESSING**
VERFAHREN ZUR VERARBEITUNG VON TIERGÜLLE
PROCÉDÉ DE TRAITEMENT DU LISIER D'ANIMAUX

(30) Priority: 09.12.2019 PL 43214019
(43) Date of publication of application: 16.06.2021
(73) Proprietor: Habryn Andrzej Inventech, 32-340 Wolbrom (PL)
(72) Inventor: HABRYN, Andrzej, 32-340 Wolbrom (PL)
(74) Representative: JD&P Patent Attorneys Joanna Dargiewicz & Partners

(56) References cited:
- EP-A1- 1 320 388
- EP-A1- 1 757 562

## Description

The subject of the invention is a method of animal (pig, cattle) liquid manure and poultry droppings processing and forms a solution to the problem of reducing ammonia, methane and odor emissions while ensuring microbiological safe, free from live parasite eggs and low-cost storage of a stable, solid fertilizer with no emission, which can be used as any solid fertilizer according to the Nitrates Directive, while retaining valuable fertilizer components, and recycling large amounts of water for use on the farm.

### Background of the Invention

The development of intensive industrial animal husbandry with litter-free rearing and high farm stocking density has led to a serious problem of generating huge amounts of liquid manure with low solids concentrations, but troublesome due to the odor emission and, above all, emission of free ammonia and, under certain conditions, methane. Due to the content of live bacteria and parasite eggs, liquid manure constitutes also an epidemiological and bacteriological hazard. As part of the Code of Good Agricultural Practice, practices, rules and procedures have been defined, regarding, among other things, activities in the field of air protection, aimed at reducing the odorant emission from agricultural production through the correct use of fertilizers and the correct maintenance of buildings for livestock. This code indicates, among other things, not to use fertilizers:
- on flooded, snow-covered or frozen soils;
- in the period from the 1^{st} of December to the last day of February;
- the natural ones - (in liquid form) and the mineral ones - (nitrates) on soils without vegetation, located on slopes with inclination of more than 10°;
- the natural ones - in liquid form (liquid manure, slurry), throughout the whole vegetation period of plants intended for direct human consumption;
- the natural ones - up to 20 m away from surface waters, water protection zones and areas of the marine coastal belt.

These problems are solved in different ways. First of all, biogas plants are constructed near large farms, which allow energy generation and smell reduction. However, there is a problem that they are very expensive and the resulting fermentate contains about 50% less fertilizing organic matter and loses some of the fertilizing nitrogen, and moreover is subject to the same application restrictions as the liquid manure. Acidification of the liquid manure with mineral acids (mainly sulfuric acid) to reduce the NH₃ emission is currently utilized in Denmark in 125 farms, where the pH of the liquid manure is lowered from ~7.5 to ~6.5. This approach is used both in buildings for livestock (giving an estimated 70% reduction in emission) and in the field (giving an estimated 60% reduction). Anaerobic fermentation (including methane fermentation), and aerobic fermentation - with an intensive aeration, are also utilized.

From the patent and scientific literature a number of solutions are known regarding the problem of liquid manure nuisance elimination and valuable substance recovery. Various methods of liquid manure treatment are described in the ECE/EB.AIR/120 document of European UN Office. In Russia, phosphogypsum and superphosphate additives have been used for a long time, which reduce the emission of ammonia; in other countries also FeCl₂, FeSO₄, gypsum, magnesium sulfate, etc. are used for this purpose. In the WO1997021647A1 specification, fly ashes, limestone flour, cement dusts or a mixture thereof are used. US patent application US20070240469A1 discloses a method of phosphorus isolation from a liquid fraction of the liquid manure with dolomite waste siftings, while in the US patent application US20030201225A1 for the liquid manure processing centrifugation, flocculation, solids and colloid suspension decantation and acidification with sulfuric acid to recover the ammonium sulfate from the liquid residue by selective precipitation are used. The US patent US6776958B1 describes a process of absorption of strong emission of gaseous NH₃ and phosphorus compounds and H₂S by changing the pH of the liquid manure and increasing the temperature, and the ammonia and other compounds are absorbed on a selective liquid sorbent. In Chinese patent application CN103708678A a multi-stage filtration of liquid manure after anaerobic fermentation on sand bed, several stage filtration on carbon filters and several stage micro, ultra and nanofiltration are used, and the product is pure water and thick sludge.

European patent application EP1320388 discloses an anaerobic digestion of animal manures, energy crops and similar organic substrates. The process is capable of refining nutrients comprised in the digested biomass to fertilizers of commercial quality. The document also provides a method for processing animal carcasses or fractions thereof including meat and bone meal etc., with the objective of providing an alternative means for processing the organic waste material of animal origin while at the same time facilitating the production of fertilizers.

European patent application EP1757562 discloses treatment of sludge, liquid manure and fermentation residues from biogas production, which comprises supplying the sludge, the liquid manure, and the residues into a fine sieve vacuum separator, manufacturing and collecting a filtrate and a separated solid, supplying the filtrate into a vibration shearing force filter, and manufacturing and collecting a primary permeate and a primary retentate. The produced permeate is used as operating water in a biogas facility, cleaning or cooling water or agricultural production water and/or supplied in a receiving stream, brook, watercourse or canalization.

None of the above-mentioned solutions completely solves the problem of converting the liquid manure into water and a highly valuable, stable, dry organic-mineral fertilizer.

The method for animal liquid manure processing according to the invention is characterized in that a liquid manure stream (3) taken from a liquid manure tank (1) and mixed with an addition of a substance (2) containing at least 1% by weight free calcium oxide or potassium oxide (e.g. biomass ash) in relation to the liquid manure weight, is filtered on a filter bed (4) of which at least 50% by volume constitutes pyrolytic carbon (7) obtained from a dry biomass (6) in a biomass pyrolysis unit (5), a primary filtrate stream (9) is subjected to nanofiltration in a nanofiltration unit (11), from where a permeate stream (12) goes to a water treatment installation (16), from which an industrial water stream (17) is obtained, while the filtration bed with pyrolytic carbon (4) with a filtered off mass (10) being a stream of solid fraction from the liquid manure (3) with pyrolytic carbon (7)) after exceeding a total mass of not less than 150% of the initial mass of carbon in the bed (4) is exchanged for a new bed with pyrolytic carbon (7), and the solid fraction stream with pyrolytic carbon (10) after mixing the dense substrate mixer (14), with the retentate stream (13) from the nanofiltration unit (11), eventually other admixture substrates (23, 24, 25) as a dense fertilizer mix (15) is granulated and dried in a granulator (26) the temperature to which the dense fertilizer mix (15) is subjected before granulating, either during granulating or drying, is not lower than 95 degrees C for not less than 20 s, simultaneously the heat for heating and drying granules (27) is obtained from the combustion of excess streams (19) - liquid and gaseous fuel from dry biomass (6) pyrolysis (excess, i.e. remaining after use for the own needs of the biomass pyrolysis unit (5)).

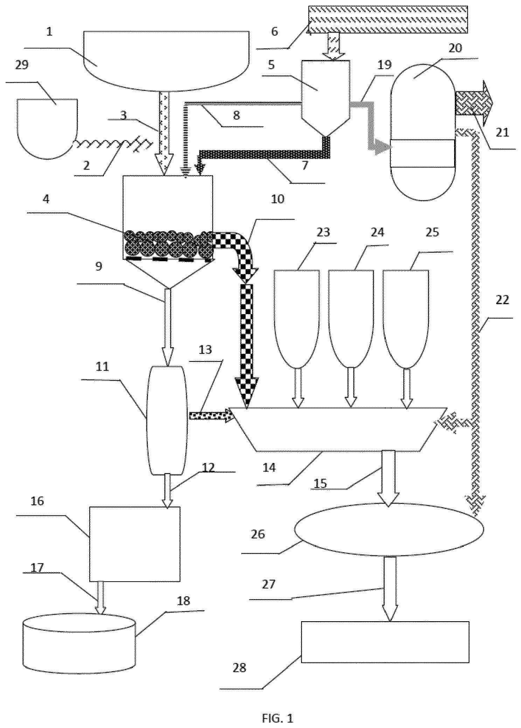

The application of the method according to the invention will enable a radical, economically justified reduction of ammonia and odor emissions, and will permit an economic and environmentally safe production of the organic-mineral fertilizer that can be used without restrictions for liquid manure. The subject of the invention in the example is shown in the drawing, in which Fig. 1 shows the basic configuration and the process flow diagram, where from the tank with liquid manure (1) mixed with CaO or K₂O carrier (2), the liquid manure stream (3) goes to the filter bed (4) of the pyrolytic carbon (7), the pyrolytic carbon (7) produced in the biomass pyrolysis unit (5) from the dry biomass (6), and the by-produced wood vinegar stream (8) from the pyrolysis goes together with the liquid manure stream (3) to the filter with a filter bed (4) from where the primary filtrate stream (9) is then purified in the nanofiltration unit (11) from where the permeate (12) goes to the water treatment installation (16) producing industrial water (17) stored in the water tank (18), and the retentate (13) is mixed in the mixer (14) with the stream of pyrolytic carbon and filtered off solid fraction (10) and the admixture substrates A, B, C dosed from the containers (23), (24) and (25), respectively, and so mixed dense fertilizer mix (15) goes to the granulator-dryer (26) heated by the heat (22) obtained in the boiler (20) from the combustion of the excess stream of liquid and gaseous products of biomass pyrolysis (19) (excess, i.e. remaining after the combustion of liquid and gaseous products of the pyrolysis process for the purpose of maintaining the pyrolysis process), with part of the useful heat (21) generated in the boiler (20) being used as useful heat. From the granulator-dryer (26), the granulated fertilizer (27) goes to the granulated fertilizer tank (28) and the CaO or K₂O oxide carrier is taken from the hopper (29).

### List of symbols used:

1. Liquid manure tank
2. Substance containing at least 1% by weight free calcium oxide or potassium oxide, such as a biomass ash
3. Liquid manure stream
4. Filter bed
5. Biomass pyrolysis unit
6. Dry biomass
7. Pyrolytic carbon stream from dry biomass
8. Wood vinegar stream
9. Primary filtrate stream
10. Stream of solid fraction with pyrolytic carbon
11. Nanofiltration unit
12. Permeate stream
13. Retentate stream
14. Dense substrate mixer
15. Dense fertilizer mix stream
16. Water treatment installation
17. Industrial water stream
18. Industrial water tank
19. Excess stream of liquid and gaseous fuel from dry biomass pyrolysis
20. Boiler
21. Useful heat stream
22. Heat stream for drying and sanitizing fertilizer granules
23. Admixture substrate A
24. Admixture substrate B
25. Admixture substrate C
26. Drying granulator
27. Granulated dry fertilizer stream
28. Granular dry fertilizer hopper.
29. Hopper for CaO or K₂O.

## Claims

1. A method for animal liquid manure processing, wherein a liquid manure stream (3) taken from a liquid manure tank (1) and mixed with an addition of a substance (2) containing at least 1% by weight free calcium oxide or potassium oxide, such as a biomass ash, in relation to the weight of the liquid manure, is filtered on a filter on a filter bed (4), at least 50% by volume of which is pyrolytic carbon (7) obtained from a dry biomass (6) in a biomass pyrolysis unit (5), a primary filtrate stream (9) is subjected to nanofiltration in a nanofiltration unit (11), from where a permeate stream (12) goes to a water treatment installation (16), from which an industrial water stream (17) is obtained, while the filtration bed (4) with pyrolytic carbon (7) with a filtered off mass (10) being a stream of solid fraction from the liquid manure (3) with pyrolytic carbon (7) after exceeding a total mass of not less than 150% of the initial carbon mass of the filter bed (4) is exchanged for a new bed with pyrolytic carbon (7) and the stream of solid fraction with pyrolytic carbon (10) after mixing in a dense substrate mixer (14), with a retentate stream (13) from the nanofiltration unit (11), eventually with other admixture substrates (23, 24, 25) as a dense fertilizer mix (15) is granulated and dried in a granulator (26), the temperature to which the dense fertilizer mix (15) is subjected either before granulating, during granulating or during drying, is not lower than 95 degrees C for not less than 20 s, at the same time, the heat for heating and drying granules (27) is obtained from combustion of excess streams (19) of liquid and gaseous fuel from the dry biomass (6) pyrolysis, the excess ones, i.e. those remaining after use for the own needs of the biomass pyrolysis unit (5).

2. The method of animal liquid manure processing according to claim 1, wherein a wood vinegar stream (8) produced during dry biomass (6) pyrolysis in the biomass pyrolysis unit (5) is mixed with the liquid manure stream (3) filtered on the filter bed (4).

3. The method of animal liquid manure processing according to claim 1, wherein a wood vinegar stream (8) produced during dry biomass (6) pyrolysis in the biomass pyrolysis unit (5) is mixed with the stream of solid fraction with the pyrolytic carbon (10) feeding the mixer (14) or upstream.

4. The method of animal liquid manure processing according to any one of the claims 1-3, wherein the dry biomass (6) is a dry material from the fermentate of agricultural biogas plants or pellets from this dry material.

5. The method of animal liquid manure processing according to any one of the claims 1-4 wherein one of the admixture substrates (23) or (24) or (25) is a urease inhibitor.

6. The method of animal liquid manure processing according to any one of the claims 1-5, wherein the permeate (12) nanofiltration is carried out in two stages.

7. The method of animal liquid manure processing according to any one of the claims. 1-6, wherein the permeate (12) nanofiltration is preceded by microfiltration or microfiltration and ultrafiltration.

8. The method of animal liquid manure processing according to any of claims 1-7, wherein the permeate (12), prior to treatment, is filtered through an additional bed of pyrolytic carbon (8), which bed is exchanged and after use is used for mixing with the stream of solid fraction with pyrolytic carbon (10).

9. The method of animal liquid manure processing according to any of claims 1-8, Wherein the permeate (12) is treated to the quality of industrial water (17) by means of reverse osmosis.

10. The method of animal liquid manure processing according to any one of the claims 1-9, wherein in that one of the admixture substrates (23) or (24) or (25) is biomass ash.

11. The method of animal liquid manure processing according to any one of the claims 1-10 wherein in that one of the admixture substrates (23) or (24) or (25) is peat.

12. The method of animal liquid manure processing according to any one of the claims 1-11, wherein the dry biomass (6) is dry material from liquid manure or chicken droppings or manure.

## Patentansprüche

1. Verfahren zur Verarbeitung von Tiergülle, wobei ein Güllestrom (3), der aus einem Gülletank (1) entnommen und mit einem Zusatz einer Substanz (2) gemischt wird, die mindestens 1 Gew.-% freies Calciumoxid oder Kaliumoxid, wie etwa eine Biomasseasche, in Bezug auf das Gewicht der Gülle enthält, auf einem Filter auf einem Filterbett (4) gefiltert wird, auf einem Filter auf einem Filterbett (4) gefiltert wird, das zu mindestens 50 Volumenprozent aus pyrolytischem Kohlenstoff (7) besteht, der aus einer Trockenbiomasse (6) in einer Biomasse-Pyrolyseeinheit (5) gewonnen wird, ein primärer Filtratstrom (9) einer Nanofiltration in einer Nanofiltrationseinheit (11) unterzogen wird, von der ein Permeatstrom (12) in eine Wasseraufbereitungsanlage (16) geht, aus der ein Brauchwasserstrom (17) gewonnen wird, während das Filtrationsbett (4) mit pyrolytischem Kohlenstoff (7) mit einer abfiltrierten Masse (10), bei der es sich um einen Strom fester Fraktionen aus der Gülle (3) handelt, nach Überschreiten einer Gesamtmasse von nicht weniger als 150% der ursprünglichen Kohlenstoffmasse des Filterbetts (4) gegen ein neues Bett mit pyrolytischem Kohlenstoff (7) ausgetauscht wird, und der Strom fester Fraktionen mit pyrolytischem Kohlenstoff (10) nach dem Mischen in einem dichten Substratmischer (14) mit einem Retentatstrom (13) aus der Nanofiltrationseinheit (11), gegebenenfalls mit anderen Beimischungssubstraten (23, 24, 25), als eine dichte Düngermischung (15) in einem Granulator (26) granuliert und getrocknet wird, die Temperatur, der das dichte Düngemittelgemisch (15) entweder vor dem Granulieren, während des Granulierens oder während des Trocknens ausgesetzt wird, nicht niedriger als 95 Grad C für nicht weniger als 20 s ist, gleichzeitig die Wärme zum Erhitzen und Trocknen von Granulat (27) aus der Verbrennung von überschüssigen Strömen (19) von flüssigem und gasförmigem Brennstoff aus der Pyrolyse von Trockenbiomasse (6) gewonnen wird, d.h. diejenigen überschüssigen Ströme, die nach der Verwendung für den Eigenbedarf der Biomasse-Pyrolyseeinheit (5) übrig bleiben.

2. Verfahren zur Verarbeitung von Tiergülle nach Anspruch 1, wobei ein Holzessigstrom (8), der bei der Pyrolyse der Trockenbiomasse (6) in der Biomasse-Pyrolyseeinheit (5) entsteht, mit dem auf dem Filterbett (4) gefilterten Güllestrom (3) vermischt wird.

3. Verfahren zur Verarbeitung von Tiergülle nach Anspruch 1, bei dem ein Holzessigstrom (8), der bei der Pyrolyse der Trockenbiomasse (6) in der Biomasse-Pyrolyseeinheit (5) entsteht, mit dem Strom der festen Fraktion mit Pyrolysekohle (10), die den Mischer (14) speist, oder stromaufwärts gemischt wird.

4. Verfahren zur Verarbeitung von Tiergülle nach einem der Ansprüche 1 bis 3, wobei die Trockenbiomasse (6) ein Trockenmaterial aus dem Fermentat landwirtschaftlicher Biogasanlagen oder Pellets aus diesem Trockenmaterial ist.

5. Verfahren zur Verarbeitung von Tiergülle nach einem der Ansprüche 1-4, wobei eines der Beimischungssubstrate (23) oder (24) oder (25) ein Ureaseinhibitor ist.

6. Verfahren zur Verarbeitung von Tiergülle nach einem der Ansprüche 1-5, wobei die Nanofiltration des Permeats (12) in zwei Stufen durchgeführt wird.

7. Verfahren zur Verarbeitung von Tiergülle nach einem der Ansprüche. 1-6, wobei der Nanofiltration des Permeats (12) eine Mikrofiltration oder eine Mikrofiltration und eine Ultrafiltration vorgeschaltet wird.

8. Verfahren zur Verarbeitung von Tiergülle nach einem der Ansprüche 1-7, wobei das Permeat (12) vor der Behandlung durch ein zusätzliches Bett aus pyrolytischem Kohlenstoff (8) gefiltert wird, das ausgetauscht und nach der Verwendung zum Mischen mit dem Strom der festen Fraktion mit pyrolytischem Kohlenstoff (10) verwendet wird.

9. Verfahren zur Verarbeitung von Tiergülle nach einem der Ansprüche 1-8, wobei das Permeat (12) mittels Umkehrosmose auf die Qualität von Brauchwasser (17) aufbereitet wird.

10. Verfahren zur Verarbeitung von Tiergülle nach einem der Ansprüche 1-9, wobei eines der Beimischungssubstrate (23) oder (24) oder (25) Biomasseasche ist.

11. Verfahren zur Verarbeitung von Tiergülle nach einem der Ansprüche 1-10, wobei eines der Beimischungssubstrate (23) oder (24) oder (25) Torf ist.

12. Verfahren zur Verarbeitung von Tiergülle nach einem der Ansprüche 1 bis 11, wobei die Trockenbiomasse (6) Trockenmaterial aus Gülle oder Hühnerkot oder Mist ist.

## Revendications

1. Méthode de traitement de lisier animal, **dans laquelle** un flux de lisier (3) prélevé d'un réservoir de lisier (1) et mélangé avec un ajout d'une substance (2) contenant au moins 1 % en poids d'oxyde de calcium libre ou d'oxyde de potassium, tel qu'une cendre de biomasse, par rapport au poids du lisier, est filtré sur un filtre sur un lit de filtration (4) dont au moins 50 % en volume est du charbon pyrolytique (7) obtenu à partir d'une biomasse sèche (6) dans une unité de pyrolyse de biomasse (5), un flux de filtrat primaire (9) est soumis à une nanofiltration dans une unité de nanofiltration (11), d'où un flux de perméat (12) va vers une installation de traitement d'eau (16), d'où est obtenu un flux d'eau industrielle (17), tandis que le lit de filtration (4) avec du charbon pyrolytique (7) avec une masse filtrée (10) étant un flux de fraction solide du lisier (3) avec du charbon pyrolytique (7) après avoir dépassé une masse totale non inférieure à 150 % de la masse initiale de carbone du lit de filtration (4) est échangé contre un nouveau lit avec le carbone pyrolytique (7) et le flux de fraction solide avec le carbone pyrolytique (10) après mélange dans un mélangeur à substrat dense (14), avec un flux de rétentat (13) issu de l'unité de nanofiltration (11), éventuellement avec d'autres substrats de mélange (23, 24, 25) lorsqu'un mélange d'engrais dense (15) est granulé et séché dans un granulateur (26), la température à laquelle est soumis le mélange d'engrais dense (15) avant la granulation, pendant la granulation ou pendant le séchage, n'est pas inférieure à 95°C pendant au moins 20 s, en même temps, la chaleur pour le chauffage et le séchage des granulés (27) est obtenue à partir de la combustion des flux excédentaires (19) de combustible liquide et gazeux de la pyrolyse de la biomasse sèche (6), ceux en excès, c'est-à-dire ceux restant après utilisation pour les besoins propres de l'unité de pyrolyse de la biomasse (5).

2. Méthode de traitement de lisier animal selon la revendication 1, **dans laquelle** un flux de vinaigre de bois (8) produit pendant la pyrolyse de la biomasse sèche (6) dans l'unité de pyrolyse de la biomasse (5) est mélangé avec le flux de lisier (3) filtré sur le lit de filtration (4).

3. Méthode de traitement de lisier animal selon la revendication 1, **dans laquelle** un flux de vinaigre de bois (8) produit pendant la pyrolyse de la biomasse sèche (6) dans l'unité de pyrolyse de biomasse (5) est mélangé avec le flux de fraction solide avec le charbon pyrolytique (10) alimentant le mélangeur (14) ou en amont.

4. Méthode de traitement de lisier animal selon l'une quelconque des revendications 1 à 3, **dans laquelle** la biomasse sèche (6) est une matière sèche provenant du fermentat d'usines de biogaz agricole ou des granulés de cette matière sèche.

5. Méthode de traitement de lisier animal selon l'une quelconque des revendications 1 à 4, **dans laquelle** l'un des substrats de mélange (23) ou (24) ou (25) est un inhibiteur d'uréase.

6. Méthode de traitement de lisier animal selon l'une quelconque des revendications 1 à 5, **dans laquelle** la nanofiltration du perméat (12) est réalisée en deux étapes.

7. Méthode de traitement de lisier animal selon l'une quelconque des revendications 1-6, **dans laquelle** la nanofiltration du perméat (12) est précédée d'une microfiltration ou d'une microfiltration et d'une ultrafiltration.

8. Méthode de traitement de lisier animal selon l'une quelconque des revendications 1 à 7, **dans laquelle** le perméat (12), avant le traitement, est filtré à travers un lit supplémentaire de charbon pyrolytique (8), lequel lit est échangé et après utilisation est utilisé pour mélange avec le flux de fraction solide avec du carbone pyrolytique (10).

9. Méthode de traitement de lisier animal selon l'une quelconque des revendications 1 à 8, **dans laquelle** le perméat (12) est traité à la qualité de l'eau industrielle (17) au moyen d'une osmose inverse.

10. Méthode de traitement de lisier animal selon l'une quelconque des revendications 1 à 9, **dans laquelle** l'un des substrats de mélange (23) ou (24) ou (25) est de la cendre de biomasse.

11. Méthode de traitement de lisier animal selon l'une quelconque des revendications 1 à 10, **dans laquelle** l'un des substrats de mélange (23) ou (24) ou (25) est de la tourbe.

12. Méthode de traitement de lisier animal selon l'une quelconque des revendications 1 à 11, **dans laquelle** la biomasse sèche (6) est un matériau sec provenant de lisier ou de déjections de poulet ou de fumier.
